# EUROPÄISCHE PATENTSCHRIFT

(11) **EP 0 905 875 B1**
(45) Veröffentlichungstag und Bekanntmachung des Hinweises auf die Patenterteilung: **24.11.2004**
(21) Anmeldenummer: 98118152.2
(22) Anmeldetag: 24.09.1998
(51) Int. Cl.: H02P 3/12

(54) **Elektrischer Bremswiderstand**
Electric brake resistance
Résistance de freinage électrique

(30) Priorität: 25.09.1997 DE 19742426
(43) Veröffentlichungstag der Anmeldung: 31.03.1999
(73) Patentinhaber: Sew-Eurodrive GmbH & Co. KG, 76646 Bruchsal (DE)
(72) Erfinder: Roth-Stielow, Jörg Dr., 75015 Bretten (DE); Schmidt, Josef, 76676 Graben-Neudorf (DE)
(74) Vertreter: Bohnenberger, Johannes, Dr.

(56) Entgegenhaltungen:
- EP-A1- 0 551 909
- DD-A- 204 813
- DE-C2- 4 022 637

## Beschreibung

Die Erfindung betrifft eine Schaltungsanordnung zur elektrischen Bremsung eines von einem Umrichter gespeisten Elektromotors nach dem Oberbegriff des Patentanspruches 1. Die Erfindung betrifft weiterhin die Verwendung eines Widerstandes als elektrischen Bremswiderstand nach dem Oberbegriff des Anspruchs 10.

Elektromotoren, insbesondere umrichtergespeiste Elektromotoren werden häufig elektrisch gebremst. Hierzu ist an den den Motor speisenden elektronischen Umrichter ein elektrischer Bremswiderstand angeschlossen. Der Umrichter wird so gesteuert, daß der Motor im generatorischen Betrieb Energie über den Umrichter an den Bremswiderstand liefert. Die (Brems-)Energie wird in dem Bremswiderstand in Wärme umgesetzt und an die Umgebung abgegeben.

Um eine Überlastung des elektrischen Bremswiderstands zu verhindern, wird üblicherweise eine zusätzliche elektronische oder thermisch-mechanische Schutzeinrichtung (Thermoschalter) vorgesehen. Dieser erhöhte Aufwand bringt gleichzeitig eine Erhöhung des Bauvolumens sowie gesteigerte Kosten mit sich, wobei außerdem der Installationsaufwand ins Gewicht fällt. Aus DD 204 813 A ist eine Bremsschaltung bekannt, bei der anstelle eines Thermoschalters Meißleiter vorgesehen sind, um temperaturempfindliche Bauteile zu überwachen.

Der Erfindung liegt die Aufgabe zugrunde, eine Schaltungsanordnung der eingangs genannten Art dahingehend weiterzubilden, daß der Herstellungs- und Montageaufwand gesenkt werden können. Eine weitere Aufgabe liegt darin, eine Verwendung eines Widerstandes als elektrischen Bremswiderstand anzugeben, die den Herstellungs- und Montageaufwand senkt.

Diese Aufgabe wird durch die im Patentanspruch 1 angegebenen Merkmale bzw. durch eine Verwendung mit den Merkmalen des Anspruchs 10 gelöst.

Ein wesentlicher Punkt der Erfindung liegt darin, daß ein besonderes Widerstandsmaterial verwendet wird, welches einen positiven und bei steigender Temperatur steigenden Temperaturkoeffizienten aufweist. Dadurch ergibt sich eine sozusagen selbsttätige "Abschaltung" des elektrischen Bremswiderstands dann, wenn seine Temperatur in einen unzulässig hohen Bereich kommt. Vorzugsweise wird hier ein PTC-Widerstand aus einem Halbleitermaterial verwendet, wie dies an sich bekannt ist.

Besonders bevorzugt ist eine Ausführungsform, bei welcher der Widerstand und die Steuereinrichtung derart ausgebildet sind, daß diejenige Temperatur, bei welcher eine erste Funktion Gₑₗ(ϑ) · (U_{Zmax})² eine zweite Funktion Pₑₗ(Δϑ) = Pₑₗ(ϑ-ϑ_{Umax}) schneidet, nicht höher liegt als die maximal zulässige Betriebstemperatur ϑ_{Bmax} des Materials des Bremswiderstands. Hierbei ist Gₑₗ(ϑ) der Leitwert des Bremswiderstands bei einer Temperatur ϑ, U_{Zmax} die von der Steuereinrichtung dem Bremswiderstand maximal zuführbare Spannung und Pₑₗ(Δϑ) die elektrische Leistung, welche dem Bremswiderstand zugeführt werden muß, um eine Temperaturerhöhung des Widerstandsmaterials zu bewirken. Weiterhin bedeutet Δϑ die Differenz zwischen der Temperatur des Bremswiderstands und der maximal zu erwartenden Umgebungstemperatur. Insbesondere wird ein Halbleitermaterial bevorzugt, das derart dotiert ist, daß sein Widerstand unterhalb von ϑ_{Bmax} progressiv mit ϑ zunimmt, jedoch in einem darunter liegenden normalen Temperaturbereich höchstens geringfügig mit ϑ zunimmt oder nicht zunimmt oder sogar abnimmt.

Durch dieses Merkmal ist gewährleistet, daß der Bremswiderstand je nach der zu erwartenden maximalen Umgebungstemperatur optimal ausgenützt wird. Ist die maximal zu erwartende Umgebungstemperatur hoch, so ist die Anordnung derart getroffen, daß der Bremswiderstand weniger Energie beziehungsweise Leistung aufnehmen kann als bei einer niedrigeren Umgebungstemperatur. Es sei hier auch erwähnt, daß unter dem Begriff "Umgebung" die gesamte, den Bremswiderstand thermisch beeinflussende Umgebung gemeint ist. Vorzugsweise ist der Bremswiderstand hierbei direkt auf dem Gehäuse eines Elektromotors (vorzugsweise im Klemmenkasten) so montiert, daß die maximale Umgebungstemperatur der maximalen Motor-Gehäuse-Temperatur entspricht, was dann gewährleistet ist, wenn der Wärmeübergangswiderstand zwischen dem Material des Bremswiderstands, seinem Gehäuse und der Montagefläche (Motorengehäuse) sehr niedrig ist. Dies kann in an sich bekannter Weise gewährleistet sein.

Vorzugsweise ist die Steuereinrichtung für den Bremswiderstand an einen Gleichspannungszwischenkreis des Umrichters - wie dieser an sich bekannt ist - angeschlossen. Dadurch ist es möglich, eine sehr einfache Steuerungseinrichtung vorzusehen, die vorzugsweise ein elektronisches, ein- und ausschaltbares Einwegventil umfaßt, das mit einer entgegengesetzt geschalteten Diode eine Reihenschaltung bildet, an welcher die Ausgangsspannung des Gleichspannungszwischenkreises liegt, wobei der Bremswiderstand parallel zur Diode geschaltet ist. Durch ein entsprechendes Steuern des Taktverhältnisses zwischen Ein- und Ausschaltung des Einwegventils kann die am Bremswiderstand anliegende Leistung leicht eingestellt werden.

Nachfolgend wird eine bevorzugte Ausführungsform der Erfindung anhand von Abbildungen näher beschrieben. Hierbei zeigen:

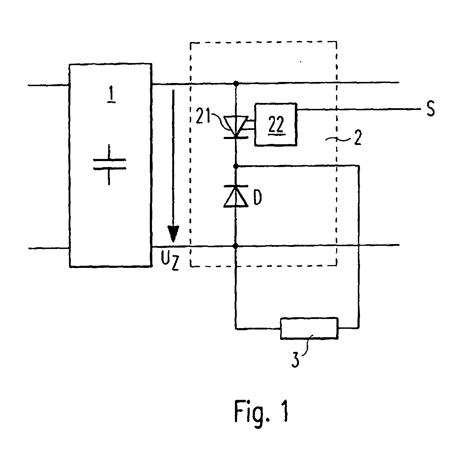

- Fig. 1: ein Teil-Schaltbild einer Ausführungsform der Erfindung,
- Fig. 2: eine Darstellung der Leistung, die einem elektrischen Widerstand zu dessen Erwärmung zugeführt werden muß,
- Fig. 3: eine Darstellung des elektrischen Leitwertes eines PTC-Widerstands über die Temperatur, und
- Fig. 4: eine Darstellung des erfindungsgemäßen Leitwert-/Leistungsverhaltens über die Temperatur.
- Fig. 5: eine Widerstands-Temperatur-Kurve eines bevorzugten Bremswiderstandes.

In der Zeichnung ist mit der Bezugsziffer 1 ein Gleichspannungszwischenkreis angedeutet, der in üblichen Umrichtern für Elektromotoren vorgesehen ist. An den Ausgangsklemmen des Gleichspannungszwischenkreises 1 liegt die (Gleich-)Spannung U_{Z}. An diesen Klemmen ist eine Reihenschaltung, gebildet aus einem elektronischen, ein- und ausschaltbaren Einwegventil 21 und einer Diode D angeschlossen, wobei das Einwegventil und die Diode D entgegengesetzt gerichtet geschaltet sind. Das Einwegventil 21 wird von einer Ansteuereinheit 22 in einem Taktverhältnis geöffnet und geschlossen, das entsprechend der angestrebten Bremswirkung über eine Steuerleitung S von außen einstellbar ist.

Parallel zur Diode D ist ein Bremswiderstand 3 angeschlossen. Die Diode D, das elektronische, ein- und ausschaltbare Ventil 21 und dessen Ansteuereinheit 22 bildet eine Steuerung (Bremschoppereinheit) zur Steuerung der dem elektrischen Bremswiderstand 3 zugeführten Leistung.

Dann, wenn eine hohe Bremsleistung gewünscht ist, wird ein entsprechendes Steuersignal S der Ansteuereinheit 22 zugeführt, die - im Extremfall - das elektronische, ein- und ausschaltbare Einwegventil 21 geöffnet hält. Dadurch liegt am Bremswiderstand 3 die gesamte Ausgangsspannung U_{Z} des Gleichspannungszwischenkreises 1 an. Wenn eine niedrigere Bremsleistung gewünscht ist, so wird über die Ansteuereinheit 22 das Einwegventil 21 getaktet, also geöffnet und geschlossen und zwar mit einem Taktverhältnis, welches der gewünschten Bremsleistung entspricht. Wird beispielsweise nur die Hälfte der maximal möglichen Bremsleistung gewünscht, so wird ein Taktverhältnis eingestellt, weiches - im Mittel - ein Viertel der Ausgangsspannung U_{Z} des Gleichspannungszwischenkreises 1 am Widerstand 3 anstehen läßt.

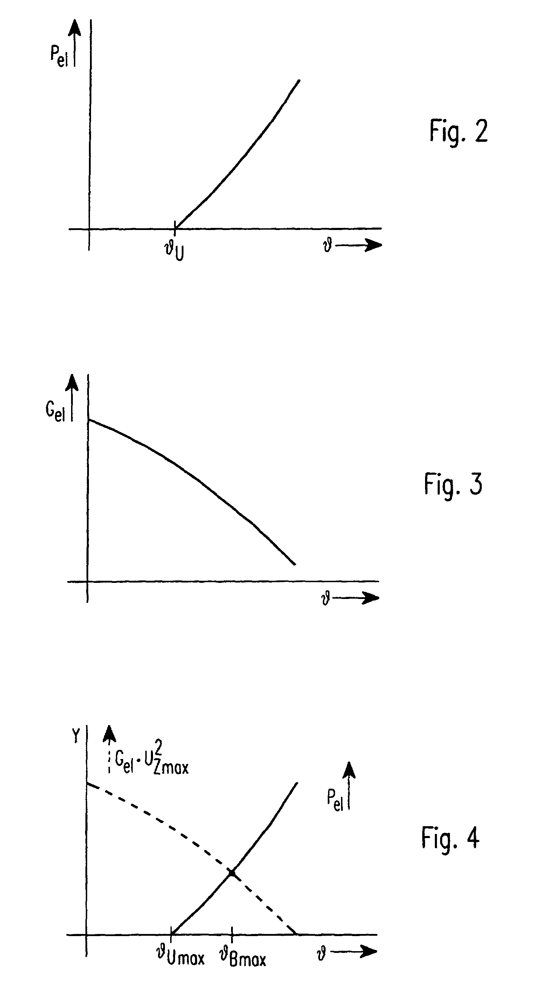

Der Bremswiderstand 3 umfaßt ein an sich bekanntes Element mit einem positiven Temperaturkoeffizienten (PTC-Widerstand). Der thermische Übergangswiderstand zwischen dem PTC-Widerstandsmaterial und seiner Umgebung, also dem Gehäuse des Widerstands und der Übergangswiderstand zwischen dem Gehäuse und seinem Montageort, nämlich dem Gehäuse eines Elektromotors hat zur Folge, daß dem elektrischen Widerstand eine bestimmte elektrische Leistung Pₑₗ zugeführt werden muß, um überhaupt eine Erhöhung Δϑ der Temperatur des Widerstandsmaterials bei gegebener Umgebungstemperatur (in diesem Fall der Temperatur des Elektromotorengehäuses) zu bewirken. Die Funktion y = Pₑₗ(Δϑ) = Pₑₗ(ϑ-ϑ_{U}) ist streng monoton steigend. Dann, wenn die Temperatur ϑ des Widerstandsmaterials der Umgebungstemperatur ϑ_{U} entspricht, ist Pₑₗ (Δϑ) = 0. Dies ist in Fig. 2 dargestellt.

Das Material des PTC-Widerstands weist einen elektrischen Leitwert Gₑₗ auf, der in Fig. 3 über die Temperatur aufgetragen ist. Dieser elektrische Leitwert Gₑₗ nimmt bei ansteigender Temperatur ϑ des Widerstandsmaterials streng monoton fallend ab.

Das Widerstandsmaterial wird nun bei den vorgegebenen Montageund Wärmeübertragungsbedingungen so ausgewählt, daß bei der maximal zu erwartenden Umgebungstemperatur ϑ_{Umax} die Abszisse des Schnittpunkts der Funktion Y1 = Gₑₗ(ϑ) · (U_{Zmax})² mit der Funktion Y₂ = Pₑₗ(Δϑ) = Pₑₗ (Δϑ)/ϑ_{Umax}) nicht höher ist als die maximal zulässige Betriebstemperatur ψ_{Bmax} des elektrischen Bremswiderstands beziehungsweise des ihn bildenden Materials, also nicht höher ist als die Temperatur, bei welcher das Widerstandsmaterial zerstört wird. Durch diese Bemessung ist gewährleistet, daß es in keinem Fall geschehen kann, daß der Bremswiderstand dadurch zerstört wird, daß ihm eine elektrische Leistung zugeführt wird, die eine Wärmeleistung erzeugt, welche nicht abführbar wäre. Der Widerstand wird vielmehr ganz einfach so hochohmig, daß die vom Gleichspannungszwischenkreis über die Steuereinrichtung dem Bremswiderstand 3 zuführbare Spannung nicht ausreicht, um den Widerstand über seine Zerstörungstemperatur hinaus zu erwärmen.

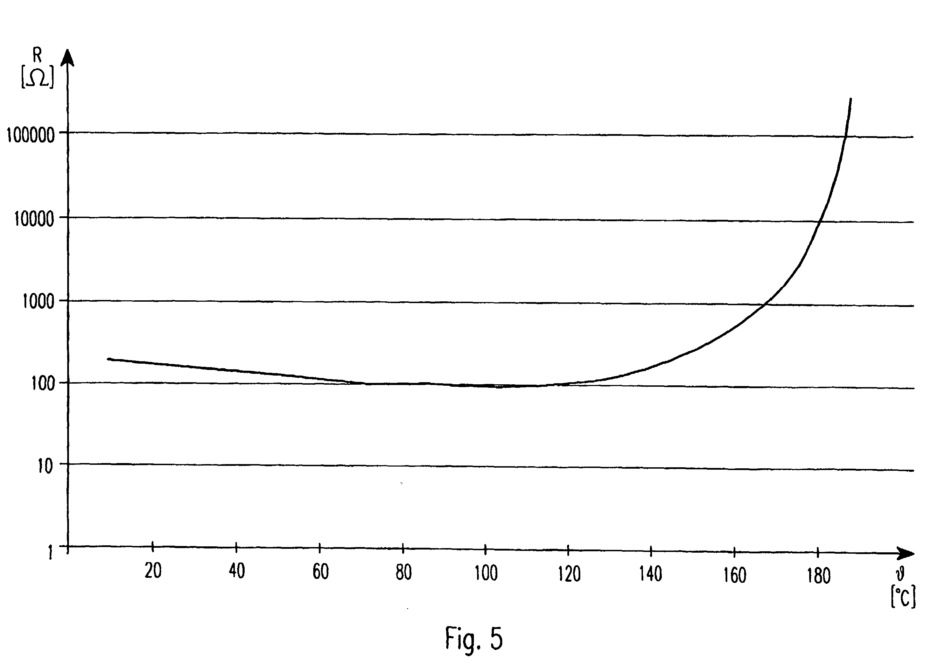

Figur 5 zeigt die Widerstand-Temperaturabhängigkeit für einen Halbleiterwiderstand aus dotiertem Halbleitermaterial, der bevorzugt als Bremswiderstand eingesetzt wird. Die maximal zulässige Betriebstemperatur ϑ_{Bmax} beträgt etwa 180°C. In dem Temperaturbereich unmittelbar unterhalb ϑ_{Bmax} nimmt der Widerstand progressiv mit ϑ zu. In einem darunter liegenden normalen Temperaturbereich für den Betrieb des Bremswiderstandes zwischen etwa 40°C und 100°C nimmt der Widerstand dagegen sogar leicht mit ϑ ab. Es ist somit gewährleistet, daß im Normalbetrieb ausreichend Bremsleistung zur Verfügung steht und daß der Bremswiderstand nicht überlastet oder zerstört wird, indem ϑ_{Bmax} überschritten wird.

### BEZUGSZEICHENLISTE

- 1: Gleichspannungszwischenkreis
- 2: Steuerungseinrichtung
- 3: Bremswiderstand
- 21: elektronisches, ein- und ausschaltbares Einwegventil
- 22: Ansteuereinheit
- D: Diode
- S: Steuersignal

## Patentansprüche

1. Schaltungsanordnung zur elektrischen Bremsung eines von einem Umrichter gespeisten Elektromotors, mit
- einem elektrischen Bremswiderstand (3) und
- einer Steuereinrichtung (2) zum Steuern der dem Bremswiderstand (3) zuführbaren Leistung,
**dadurch gekennzeichnet, daß**
der Bremswiderstand (3) in einem Temperaturbereich, der unterhalb einer maximal zulässigen Betriebstemperatur (ϑ_{Bmax}) des Bremswiderstands (3) liegt, einen progressiv mit steigender Temperatur abnehmenden elektrischen Leitwert hat.

2. Schaltungsanordnung nach Anspruch 1,
**dadurch gekennzeichnet, daß**
der Bremswiderstand (3) aus einem Halbleitermaterial gefertigt ist.

3. Schaltungsanordnung nach Anspruch 1 oder 2,
**dadruch gekennzeichnet, daß**
der Bremswiderstand (3) direkt mit einem Gehäuse des zu bremsenden Elektromotors verbunden ist, so daß die Temperatur der Umgebung, an die Bremswärme von dem Bremswiderstand abführbar ist, der Gehäusetemperatur entspricht.

4. Schaltungsanordnung nach einem der Ansprüche 1 bis 3,
**dadurch gekennzeichnet, daß**
die Steuereinrichtung (2) an einen Gleichspannungszwischenkreis (1) des Umrichters angeschlossen ist.

5. Schaltungsanordnung nach Anspruch 4,
**dadurch gekennzeichnet, daß**
die Steuereinrichtung (2) ein elektronisches, ein- und ausschaltbares Einwegventil (21) umfaßt, das mit einer entgegengesetzt gerichtet geschalteten Diode (D) eine Reihenschaltung bildet, an welcher eine Ausgangsspannung (U_{Z}) des Gleichspannungszwischenkreises (1) liegt, wobei der Bremswiderstand (3) parallel zur Diode (D) geschaltet ist.

6. Schaltungsanordnung nach Anspruch 5,
**dadurch gekennzeichnet, daß**
der Wert des elektrischen Widerstandes des Bremswiderstandes (3) bei der maximal zulässigen Betriebstemperatur (ϑ_{Bmax}) derart bemessen ist, daß die maximal zulässige Betriebstemperatur (ϑ_{Bmax}) bei dauerhaft eingeschaltetem Einweg-Ventil (21) und bei der maximal zu erwartenden Umgebungstemperatur (ϑ_{Umax}) nicht überschritten wird.

7. Schaltungsanordnung nach Anspruch 6,
**dadurch gekennzeichnet, daß**
als maximal zu erwartende Umgebungstemperatur (ϑ_{Umax}) die maximale Motorgehäusetemperatur angenommen wird.

8. Schaltungsanordnung nach einem der Ansprüche 1 bis 7,
**dadurch gekennzeichnet, daß**
der Bremswiderstand im Klemmenkasten des Elektromotors montiert ist.

9. Schaltungsanordnung nach einem der vorhergehenden Ansprüche,
**dadurch gekennzeichnet, daß**
der Bremswiderstand (3) und die Steuereinrichtung (2) derart ausgebildet sind, daß eine Temperatur (ϑ), bei welcher eine erste Funktion y = Gₑₗ (ϑ) · (U_{Zmax} )² eine zweite Funktion y = Pₑₗ (Δϑ) = Pₑₗ (ϑ-ϑ_{Umax} ) schneidet, nicht höher liegt als eine maximal zulässige Betriebstemperatur ϑ_{Bmax} des Bremswiderstands (3), worin
Gₑₗ(ϑ) der Leitwert des Bremswiderstands (3) bei einer Temperatur ϑ,
U_{Zmax} die von der Steuereinrichtung (2) dem Bremswiderstand (3) maximal zuführbare Spannung,
ϑ_{Umax} die maximal zu erwartende Umgebungstemperatur, und
Pₑₗ(Δϑ) die elektrische Leistung, welche dem Bremswiderstand (3) zugeführt werden muß, um eine Temperaturerhöhung des Widerstandsmaterials um Δϑ°K zu bewirken,
sind.

10. Verwendung eines Widerstandes als elektrischen Bremswiderstand (3) zur elektrischen Bremsung eines von einem Umrichter gespeisten Elektromotors,
**dadurch gekennzeichnet, daß**
der Bremswiderstand (3) in einem Temperaturbereich, der unterhalb einer maximal zulässigen Betriebstemperatur (ϑ_{Bmax}) des Bremswiderstands (3) liegt, einen progressiv mit steigender Temperatur abnehmenden elektrischen Leitwert hat.

11. Verwendung nach Anspruch 8,
**dadurch gekennzeichnet, daß**
der Bremswiderstand (3) aus einem Halbleitermaterial gefertigt ist.

## Claims

1. Circuit arrangement for the electric braking of an electric motor which is fed by a converter, with
- an electrical braking resistor (3) and
- a control device (2) for controlling the power which can be supplied to the braking resistor (3),
**characterised in that**
the braking resistor (3) has an electric conductance which progressively decreases as the temperature increases in a temperature range which lies below a maximum permissible operating temperature (ϑ_{Bmax}) of the braking resistor (3).

2. Circuit arrangement according to Claim 1,
**characterised in that**
the braking resistor (3) is made of a semiconductor material.

3. Circuit arrangement according to Claim 1 or 2,
**characterised in that**
the braking resistor (3) is connected directly to a casing of the electric motor which is to be braked, so that the temperature of the environment to which braking heat can be removed from the braking resistor corresponds to the casing temperature.

4. Circuit arrangement according to any one of Claims 1 to 3,
**characterised in that**
the control device (2) is connected to a d.c. intermediate circuit (1) of the converter.

5. Circuit arrangement according to Claim 4,
**characterised in that**
the control device (2) comprises an electronic one-way valve (21) which can be switched on and off and which, together with a diode (D) connected in the opposite direction, forms a series connection to which an output voltage (U_{Z}) of the d.c. intermediate circuit (1) is applied, wherein the braking resistor (3) is connected in parallel with the diode (D).

6. Circuit arrangement according to Claim 5,
**characterised in that**
the value of the electrical resistance of the braking resistor (3) at the maximum permissible operating temperature (ϑ_{Bmax}) is determined such that the maximum permissible operating temperature (ϑ_{Bmax}) is not exceeded when the one-way valve (21) is permanently switched on and the ambient temperature is at the maximum level (ϑ_{Umax}) which is to be expected.

7. Circuit arrangement according to Claim 6,
**characterised in that**
the maximum motor casing temperature is assumed as the maximum ambient temperature (ϑ_{Umax}) which is to be expected.

8. Circuit arrangement according to any one of Claims 1 to 7,
**characterised in that**
the braking resistor is disposed in the terminal box of the electric motor.

9. Circuit arrangement according to any one of the preceding Claims,
**characterised in that**
the braking resistor (3) and the control device (2) are formed such that a temperature (ϑ) at which a first function y = Gₑₗ(ϑ) · (U_{Zmax})² intersects a second function y = Pₑₗ(Δϑ) = Pₑₗϑ-ϑ_{Umax}) is no higher than a maximum permissible operating temperature ϑ_{Bmax} of the braking resistor (3), wherein
Gₑₗ(ϑ) is the conductance of the braking resistor (3) at a temperature ϑ,
U_{Zmax} is the maximum voltage which can be supplied by the control device (2) to the braking resistor (3),
ϑ_{Umax}) is the maximum ambient temperature which is to be expected, and
Pₑₗ(Δϑ) is the electric power which must be supplied to the braking resistor (3) in order to increase the temperature of the resistor material by Δϑ°K.

10. Use of a resistor as an electrical braking resistor (3) for the electric braking of an electric motor which is fed by a converter,
**characterised in that**
the braking resistor (3) has an electric conductance which progressively decreases as the temperature increases in a temperature range which lies below a maximum permissible operating temperature (ϑ_{Bmax}) of the braking resistor (3).

11. Use according to Claim 8,
**characterised in that**
the braking resistor (3) is made of a semiconductor material.

## Revendications

1. Agencement de circuit pour le freinage électrique d'un moteur électrique alimenté par un convertisseur, avec
- une résistance de freinage électrique (3) et
- un dispositif de commande (2) pour commander la puissance alimentée à la résistance de freinage (3),
**caractérisé en ce que** la résistance de freinage (3) a une conductance électrique qui diminue progressivement au fur et à mesure que la température augmente dans une plage de température qui est inférieure à une température de service maximale admissible (υBmax) de la résistance de freinage (3).

2. Agencement de circuit selon la revendication 1, **caractérisé en ce que** la résistance de freinage (3) est fabriquée dans un matériau de type semi-conducteur.

3. Agencement de circuit selon la revendication 1 ou 2, **caractérisé en ce que** la résistance de freinage (3) est raccordée directement à un boîtier du moteur électrique à freiner, de sorte que la température de l'environnement, vers lequel la chaleur de freinage peut être dissipée à partir de la résistance de freinage, correspond à la température du boîtier.

4. Agencement de circuit selon l'une quelconque des revendications 1 à 3,
**caractérisé en ce que** le dispositif de commande (2) est raccordé à un circuit intermédiaire de tension continue (1) du convertisseur.

5. Agencement de circuit selon la revendication 4, **caractérisé en ce que** le dispositif de commande (2) comprend une soupape unidirectionnelle électronique (21) qui peut être mise en tension en hors tension et qui forme, avec une diode (D) montée dans une direction opposée, un montage en série auquel est appliquée une tension de sortie (U_{Z}) du circuit intermédiaire de tension continue (1), moyennant quoi la résistance de freinage (3) est montée en parallèle à la diode (D).

6. Agencement de circuit selon la revendication 5, **caractérisé en ce que** la valeur de la résistance électrique de la résistance de freinage (3) est mesurée, à la température de service maximale admissible (υBmax), de telle manière que la température de service maximale admissible (υBmax) n'est pas dépassée lorsque la soupape unidirectionnelle (21) est mise en tension en permanence et à la température ambiante prévue (υUmax).

7. Agencement de circuit selon la revendication 6, **caractérisé en ce que** l'on prend comme température ambiante maximale prévue (υUmax) la température maximale du boîtier du moteur.

8. Agencement de circuit selon l'une quelconque des revendications 1 à 7, **caractérisé en ce que** la résistance de freinage est montée dans la boîte à bornes du moteur électrique.

9. Agencement de circuit selon l'une quelconque des revendications précédentes, **caractérisé en ce que** la résistance de freinage (3) et le dispositif de commande (2) sont configurés de telle manière qu'une température (υ), à laquelle une première fonction y = Gₑₗ(υ) · (U_{Zmax})² coupe une seconde fonction y = Pₑₗ(Δυ) = Pₑₗ(υ-υ_{Umax}), n'est pas supérieure à une température de service maximale admissible (υBmax) de la résistance de freinage (3), où
Gₑₗ(υ) est la conductance de la résistance de freinage (3) à une température u,
U_{Zmax} est la tension maximale qui peut être alimentée par le dispositif de commande (2) à la résistance de freinage (3),
Pₑₗ(Δυ) est la puissance électrique qui doit être alimentée à la résistance de freinage (3) pour provoquer une augmentation de température de Δυ°K du matériau de la résistance.

10. Utilisation d'une résistance comme résistance de freinage électrique (3) pour le freinage électrique d'un moteur électrique alimenté par un convertisseur, **caractérisée en ce que** la résistance de freinage (3) a une conductance électrique qui diminue progressivement au fur et à mesure que la température augmente dans une plage de température qui est inférieure à une température de service maximale admissible (υBmax) de la résistance de freinage (3).

11. Utilisation selon la revendication 8, **caractérisée en ce que** la résistance de freinage (3) est fabriquée dans un matériau de type semi-conducteur.
